# FASCICULE DE BREVET EUROPEEN

(11) **EP 1 147 382 B1**
(45) Date de publication et mention de la délivrance du brevet: **01.09.2004**
(21) Numéro de dépôt: 00901175.0
(22) Date de dépôt: 25.01.2000
(51) Int. Cl.: G01F 23/296

(54) **DIPOSITIF PIEZO-ELECTRIQUE DE MESURE DE NIVEAU DE LIQUIDE**
PIEZOELEKTRISCHE FLÜSSIGKEITSSTANDS-MESSVORRICHTUNG
PIEZOELECTRIC DEVICE FOR MEASURING LIQUID LEVEL

(30) Priorité: 26.01.1999 FR 9900818
(43) Date de publication de la demande: 24.10.2001
(73) Titulaire: MARWAL SYSTEMS, 51000 Chalons en Champagne (FR)
(72) Inventeur: BENGHEZAL, Karim, F-51000 Chalons-en-Champagne (FR); OUENNICHE, Karim, F-51150 Conde-sur-Marne (FR)
(74) Mandataire: Texier, Christian
(86) Numéro de dépôt international: PCT/FR2000/000160
(87) Numéro de publication internationale: WO 2000/045137

(56) Documents cités:
- EP-A- 0 138 541
- WO-A-91/02950
- WO-A-98/04889
- DE-A- 4 126 063
- US-A- 2 753 542

## Description

La présente invention concerne le domaine des dispositifs de mesure de niveau de liquide à base de moyens piézo-électriques.

La présente invention trouve notamment application dans le domaine de la mesure de niveau/volume de carburant dans un réservoir de véhicules automobiles.

On a déjà proposé différents dispositifs piézo-électriques pour la mesure de niveau de liquide, notamment de carburant.

Sur ce point, on pourra se référer par exemple aux documents FR-A-2751744, US-A-5095748, US-A-2753542, EP-A-0138541, WO-A-91/02950.

Plus précisément la présente invention concerne les dispositifs de mesure de niveau de liquide comprenant au moins un ensemble de détection (dénommé parfois sonde ou capteur) comprenant au moins deux cellules piézo-électriques associées à des moyens de commande pour émettre des ondes ultrasonores respectivement en regard d'un réflecteur de référence situé à une distance connue de la cellule associée, d'une part, et de la surface supérieure du liquide, d'autre part, et des moyens de traitement adaptés pour déterminer le niveau de liquide en exploitant les temps respectifs de propagation des ondes ultrasonores émises par chacune de ces deux cellules.

La présente invention a pour but de perfectionner les dispositifs du type précité.

Ce but est atteint selon la présente invention grâce à un dispositif de ce type comprenant des moyens adaptés pour définir, après mise sous tension du dispositif, une phase d'initialisation pendant laquelle les moyens de commande pilotent les cellules piézo-électriques de sorte que le rapport entre le rythme d'excitation de la cellule de référence et celui de la mesure de niveau soit supérieur au rapport entre ces mêmes rythmes pendant la phase de mesure ultérieure.

Selon une autre caractéristique avantageuse de la présente invention, le dispositif comprend en outre des moyens aptes à définir au moins une phase de diagnostic pendant laquelle les cellules piézo-électriques sont isolées des sorties des moyens de commande et les moyens de diagnostic sont sensibles aux signaux présents sur les sorties de ces moyens de commande.

D'autres caractéristiques, buts et avantages de la présente invention apparaîtront à la lecture de la description détaillée qui va suivre et en regard des dessins annexés, donnés à titre d'exemples non limitatifs et sur lesquels :
- la figure 1 représente une vue schématique de l'installation des cellules piézo-électriques conformes à la présente invention,.
- la figure 2 représente une vue en plan de telles cellules piézo-électriques,
- la figure 3 représente en 3a l'impulsion d'ondes ultrasonores émises par une cellule piézo-électrique et l'écho correspondant réfléchit sur une référence et en 3b l'impulsion d'excitation émise par une seconde cellule et l'écho provenant de la réflexion sur la surface supérieure du liquide,
- la figure 4 représente une vue schématique de moyens de commande associés à un microprocesseur ou microcontrôleur pour piloter les cellules piézo-électriques,
- la figure 5 illustre sous forme d'un chronogramme schématique le principe de mesure du temps séparant l'émission d'une impulsion d'excitation et la réception d'un écho correspondant,
- les figures 6 à 13 représentent schématiquement sous forme d'organigrammes le processus préférentiel de mesure conforme à la présente invention, et
- les figures 14 à 19 représentent schématiquement l'illustration séquentielle des différentes étapes de mesure successives opérées dans le cadre de la présente invention.

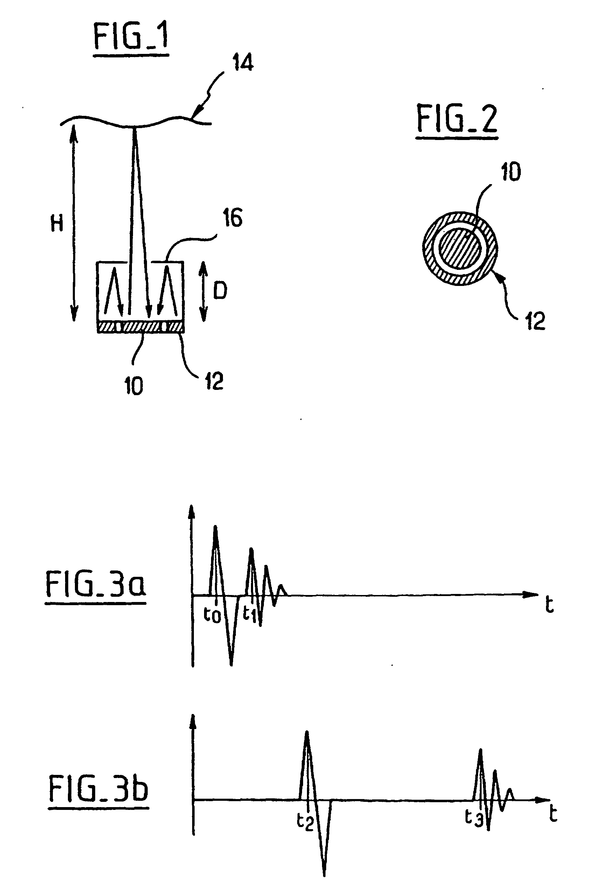

Comme illustré sur les figures 1 et 2 annexées, le dispositif de mesure conforme à la présente invention comprend au moins un ensemble de détection comportant deux cellules piézo-électriques, 10, 12, par exemple des cellules céramiques, associées à des moyens de commande.

Lorsque ces cellules 10, 12, sont excitées par un signal électrique alternatif proche de leur fréquence de résonance, les cellules vibrent et créent une onde de pression.

Inversement, lorsque les cellules piézo-électriques 10, 12, sont sollicitées mécaniquement par une onde de pression, elles génèrent en sortie un signal électrique.

Plus précisément encore, dans le cadre de l'invention, les deux cellules piézo-électriques 10, 12 placées de préférence au niveau du fond d'un réservoir sont adaptées pour émettre des ondes ultrasonores respectivement en direction de la surface supérieure du liquide référencé 14 sur la figure 1 et en direction d'un réflecteur 16 de référence, situé à une distance D connue de la cellule 12 associée.

La configuration des cellules 10, 12 peut faire l'objet de nombreuses variantes de réalisation.

A titre d'exemple non limitatif, comme illustré sur la figure 2, la cellule 10 adaptée pour émettre une onde ultrasonore en direction de la surface 14 du liquide peut être formée d'un disque plan central, tandis que la cellule 12 adaptée pour émettre en direction de la référence 16 est formée d'une couronne concentrique disposée sur l'extérieur du disque central 10. Dans ce cas, de préférence, comme schématisé sur la figure 1, la référence 16 est formé elle-même d'une couronne plane parallèle aux cellules 10, 12 et dont l'ouverture centrale est placée en regard du disque de la cellule 10.

La présente invention n'est cependant pas limitée à cette disposition particulière de cellules. A titre d'exemple non limitatif, on peut ainsi prévoir des cellules 10, 12 sous forme de deux demi-disques juxtaposés.

On notera également que dans le cadre de la présente invention, les deux cellules 10, 12 peuvent être formées sur des pastilles piézo-électriques distinctes, ou sur une même pastille piézo-électrique, les deux cellules 10, 12 étant individualisées sur celle-ci, par des métallisations distinctes respectives, pour la face supérieure de la pastille, côté liquide, sous forme d'un disque intérieur central pour la cellule 10 utilisée pour la mesure de hauteur et sous forme d'un anneau extérieur pour la cellule 12 utilisée pour la mesure du temps de référence.

Le dispositif de mesure conforme à la présente invention comporte en outre des moyens de traitement aptes à déterminer la hauteur H de liquide dans le réservoir en exploitant les temps respectifs de propagation des ondes émises par chacune de ces deux cellules 10, 12.

Sur la figure 3, on a illustré en 3a, d'une part l'impulsion d'excitation de la cellule de référence 12 en un temps to et l'écho correspondant reçu à l'instant t1 sur la même cellule 12 après réflexion sur la référence 16.

De même, on a illustré sur la figure 3b l'impulsion d'excitation de la cellule de mesure 10 à l'instant t2 et l'écho détecté à l'instant t3 sur la même cellule 10 après réflexion sur la surface supérieure 14 du liquide.

De préférence, les moyens de traitement précités sont ainsi adaptés pour déterminer la hauteur H de liquide, sur la base de la relation H=D(t3-t2)/(t1-to).

Plus précisément encore, la présente invention est particulièrement adaptée pour un dispositif de mesure comprenant au moins deux ensembles du type illustré sur les figures 1 et 2, comportant chacun une cellule de mesure 10 et une cellule de référence 12. Ainsi, la présente invention trouve notamment application dans la mesure de niveau de carburant dans des réservoirs multipoches, à raison d'un ensemble piézo-électrique comprenant une cellule de mesure 10 et une cellule de référence 12 dans chaque poche du réservoir.

L'homme de l'art sait en effet que de nos jours, on réalise fréquemment des réservoirs de carburant multipoches, par exemple et le plus souvent comprenant deux poches situées de part et d'autre de l'essieu arrière du véhicule et reliées entre elles en leur partie supérieure par un canal de liaison.

Dans la suite de la description, on appellera respectivement S1 et S2 de tels deux ensembles de détection comportant chacun une cellule de mesure 10 et une cellule de référence 12 placées respectivement dans l'une des poches d'un réservoir deux poches.

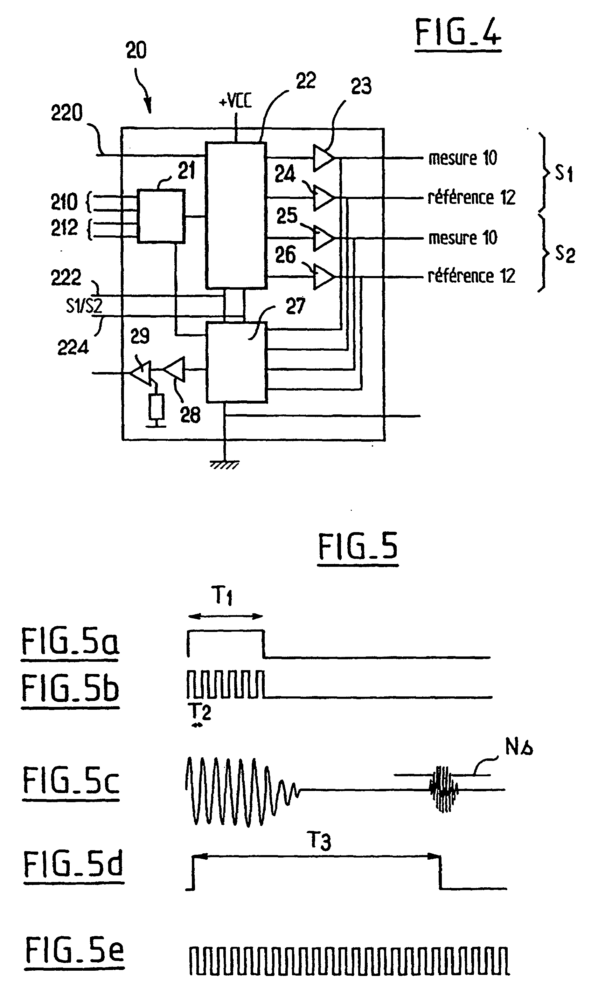

On a illustré schématiquement sur la figure 4, la structure générale de moyens de commande 20 associés à de tels ensembles piézo-électriques S1, S2.

Les moyens de commande 20 illustrés sur la figure 4, alimentés par une tension positive +VCC, par exemple de 12Volts,comprennent essentiellement un étage diviseur 21, un étage démultiplexeur 22 et un étage multiplexeur 27.

L'étage diviseur 21 reçoit un signal d'horloge sur ces entrées 210 et fournit sur ces sorties 212 un signal d'horloge divisé dont la fréquence est compatible avec le traitement du signal.

Le démultiplexeur 22 comporte quatre sorties reliées respectivement par l'intermédiaire de portes 23, 24, 25 et 26 aux cellules de mesure 10 et de référence 12 du premier ensemble S1 et aux cellules de mesure 10 et de référence 12 du second ensemble S2.

L'application des signaux d'excitation sur les sorties du démultiplexeur 22 à l'adresse des cellules 10, 12 des deux ensembles S1, S2 est contrôlée par une première entrée 220 du démultiplexeur 22 recevant un signal d'initialisation, une deuxième entrée 222 permettant une sélection entre les cellules de mesure 10 et les cellules de référence 12 et une troisième entrée 224 permettant une sélection entre les deux ensembles S1/S2.

Les même signaux de sélection appliqués sur les entrées 222, 224 du démultiplexeur sont également appliqués sur des entrées correspondantes du mutiplexeur 27. Ce dernier a quatre entrées reliées respectivement aux sorties des portes 23, 24, 25 et 26.

Le multiplexeur 27 dont la fonction est de détecter la réception de signaux d'échos sur les cellules 10, 12 a sa sortie reliée à la sortie des moyens de commande par l'intermédiaire de portes de mise en forme 28, 29, par exemple à détection de seuil.

Le cas échéant, les moyens de commande 20 illustrés sur la figure 4 peuvent être complétés, d'une part, par une entrée de sélection additionnelle permettant la sélection d'un mode de fonctionnement en diagnostic et, d'autre part, par un jeu de portes additionnelles disposées entre les portes 23-26 et les cellules piézo-électriques pour permettre d'isoler les cellules piézo-électriques des portes 23-26 et du multiplexeur 27 en mode diagnostic.

On a schématisé sur la figure 5, un processus de mesure du temps séparant l'émission d'une onde ultrasonore en sortie d'une cellule 10 ou 12 et la détection d'un écho correspondant.

On a ainsi illustré sur la figure 5a, un créneau d'initialisation appliqué, par exemple par un microprocesseur extérieur, sur l'entrée 220 du démultiplexeur 22. A titre d'exemple non limitatif, une telle impulsion d'initialisation ou créneau d'initialisation peut posséder une amplitude de l'ordre de 5Volts et une durée T1 de l'ordre de 1,5µs à 6µs.

Comme illustré sur la figure 5b, pendant ce créneau d'initialisation, le démultiplexeur 22 génère sur l'une de ses sorties; à destination de l'une des cellules de mesure 10 ou de référence 12 de l'un des ensembles S1/S2, selon l'état des lignes de sélection 222, 224, une suite d'impulsions d'excitation correspondant par exemple aux impulsions issues du diviseur 21. A titre d'exemple non limitatif, de telles impulsions, de forme carrée, ont une période T2 de l'ordre de 500ns.

On a illustré sur la figure 5c, sur la gauche de la figure, l'onde ultrasonore de pression générée par la vibration de la cellule piézo-électrique sous l'effet du signal d'excitation illustré sur la figure 5b, et sur la droite de la figure, l'écho correspondant détecté sur la même cellule.

On a également schématisé sur la figure 5c, un niveau de seuil Ns (exploité par exemple par la porte 29) par rapport auquel est comparé le signal détecté sur une cellule piézo-électrique, pour discriminer entre un signal d'écho reçu sur une telle cellule (lequel est supérieur à Ns) et un signal de bruit (lequel est inférieur à Ns).

Ainsi, lorsqu'un signal d'écho supérieur au seuil Ns est détecté sur une cellule piézo-électrique, on peut connaître le temps T3 (voir figure 5d) séparant l'instant initial d'émission de l'excitation et l'apparition de l'écho.

Par comptage des impulsions d'horloge émises pendant ce temps T3 (voir figure 5e), on peut aisément déterminer le temps d'aller et retour de l'onde ultrasonore après réflexion sur le niveau du liquide 14 ou la référence 16.

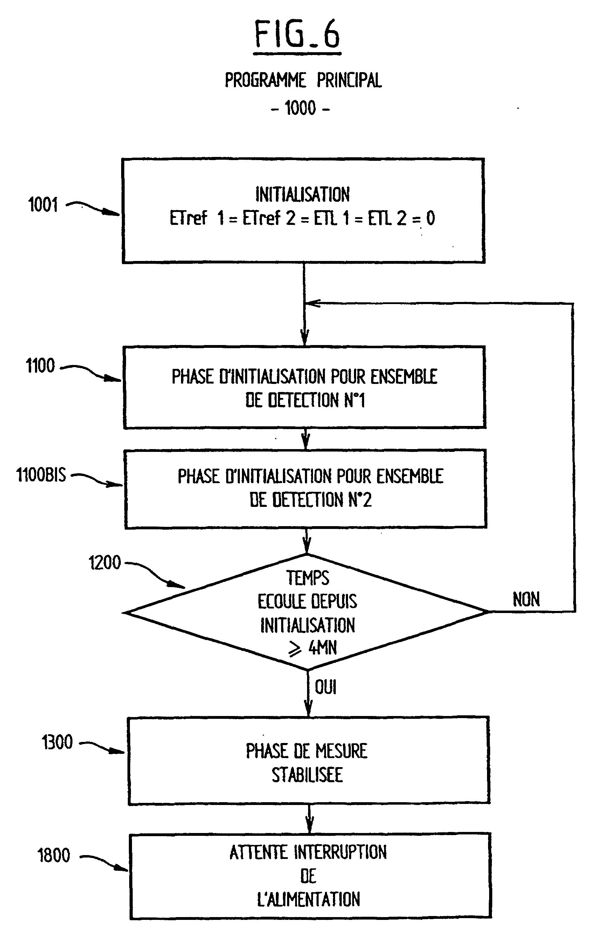

On va maintenant décrire l'organigramme du processus de mesure conforme à la présente invention en regard des figures 6 à 13.

Dans le cadre de ce descriptif ainsi que sur les figures 6 à 13, on utilise la terminologie suivante :
TL1, TL2 ou TLi désigne la durée du trajet aller/retour d'une onde ultrasonore émise par une cellule piézo-électrique 10, réfléchie sur la surface supérieure 14 du liquide et détectée par la même cellule 10 sur un capteur S1, S2 ou Si ;
Tref1, Tref2 ou Trefi désigne une référence de temps correspondant à la durée du trajet aller/retour d'une onde ultrasonore émise par la cellule piézo-électrique de référence 12, réfléchie sur la référence 16 et détectée sur la même cellule 12 pour le capteur S1, S2 ou Si ;
ETL1, ETL2 ou ETLi désigne le nombre de mesures invalides consécutives pour TL1, TL2 ou TLi ;
ETref1, ETref2 ou Etrefi désigne le nombre de valeurs invalides et consécutives pour Tref1, Tref2 ou Trefi ;
L1, L2 ou Li désigne le niveau de liquide calculé dans une poche n° 1, n° 2 ou n° i de réservoir ;
Fref1, Fref2 ou Frefi désigne une détection de défaut pour le circuit de mesure (au niveau de lignes de liaison, de connecteur ou de cellules piézo-électriques) pour l'une des références de temps liée au capteur S1, S2 ou Si ;
FL1, FL2 ou FLi désigne la détection d'un défaut pour le circuit de mesure (au niveau d'une ligne de liaison, d'un connecteur ou d'une cellule piézo-électrique) pour l'un des niveaux de liquide dans les poches n° 1, n° 2 ou i ;
D désigne la distance séparant l'obstacle de référence 16 et la cellule piézo-électrique 12 (typiquement D est de l'ordre de 20mm) ;
Nex désigne le nombre d'impulsions d'excitation émises depuis le début d'une phase de mesure TLi ou Trefi ;
Nmes désigne le nombre d'échos valides depuis le début d'une phase de mesure TLi ou Trefi ;
Nexmax désigne le nombre maximal d'impulsions d'excitation admises (typiquement Nexmax = 99) ;
Nav désigne le nombre de valeurs de temps acquises pour réaliser la moyenne nécessaire pour mémoriser Trefi ou TLi (typiquement Nav=4) ;
n désigne un nombre entier nécessaire pour les processus de réitération en boucle.

On notera dès à présent que de préférence les paramètres suivants: Tref1, Tref2, TL1, TL2, L1, L2, Fref1, Fref2, FL1, FL2, sont mémorisés après avoir été calculés ou mesurés et sont sauvegardés en cas d'interruption de l'alimentation du système.

Par ailleurs, de préférence, les paramètres suivants : ETref1, ETref2, ETL1, ETL2 sont mémorisés après avoir été calculés mais n'exigent pas nécessairement une sauvegarde après rupture de l'alimentation.

On notera par ailleurs que de préférence lorsqu'un défaut est détecté sur une référence de temps Fref1 ou Fref2, on remplace de préférence la valeur erronée obtenue par la plus haute valeur mémorisée pour Trefi, par exemple 42ms.

De même, lorsqu'un défaut est détecté sur le niveau pour FL1 ou FL2, on retient de préférence des valeurs prédéterminées pour Li ou Tli par exemple Li=0mm et Tli=20µs.

On a illustré sur la figure 6, l'organigramme principal 1000 du processus.

Cet organigramme principal débute par une étape 1001 d'initialisation au cours de laquelle les paramètres ETref1, ETref2, ETL1 et ETL2 sont mis à zéro.

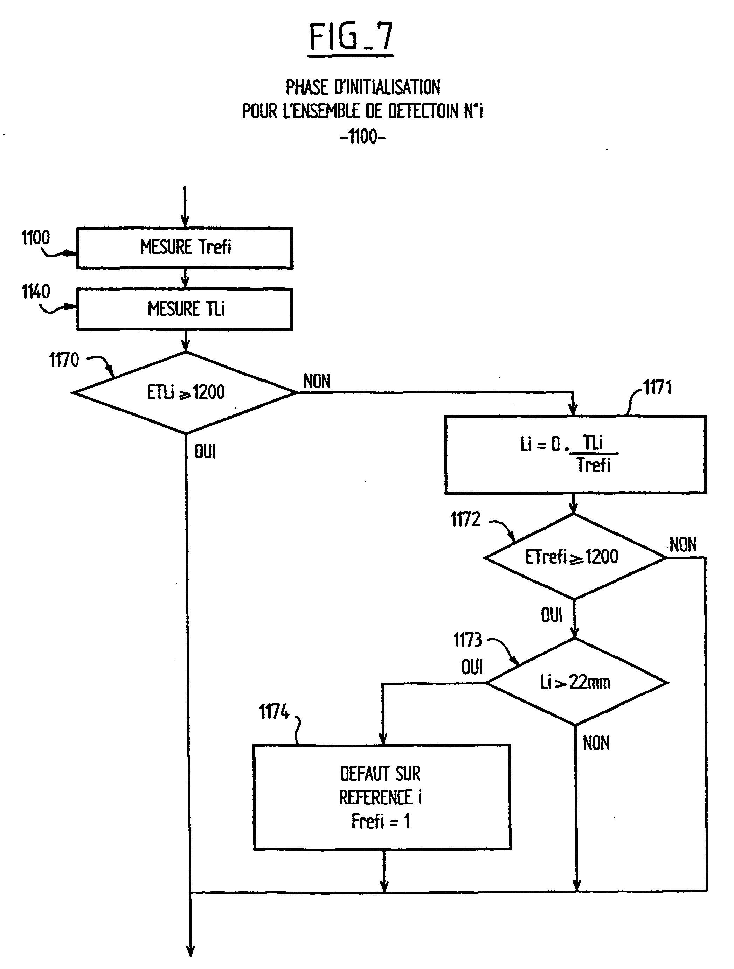

Cette étape d'initialisation 1001 est suivie d'un sous programme 1100 d'initialisation de paramètres de mesure pour le capteur S1 puis d'un sous programme 1100bis d'initialisation de paramètres de mesure pour le capteur S2. Le déroulement de ces deux sous programmes 1100, 1100bis, globalement identiques sera détaillé ultérieurement en regard de la figure 7.

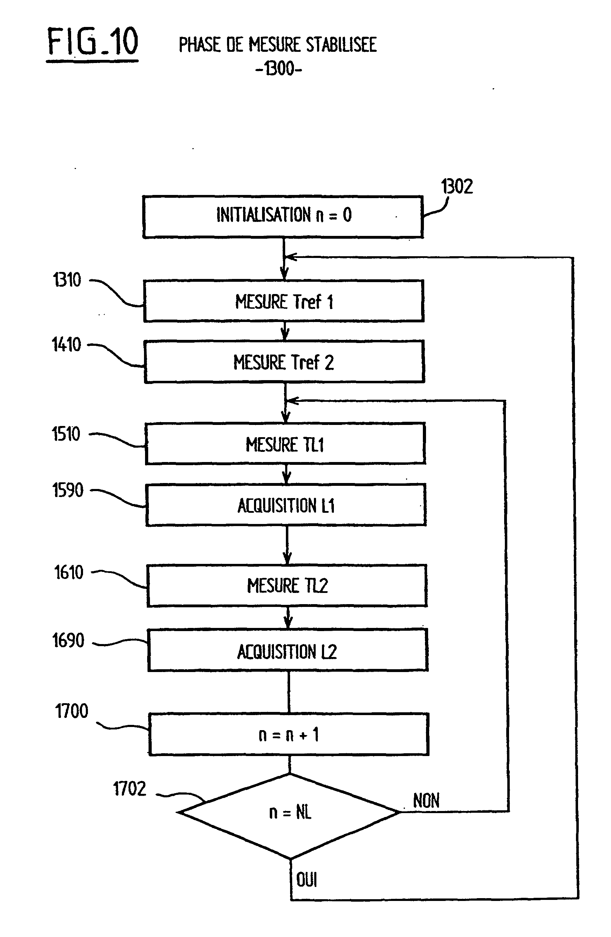

A la fin de chaque sous programme 1100bis, les moyens de contrôle déterminent si un temps prédéterminé, par exemple de l'ordre de 4mn est atteint après l'initialisation, comme schématisé sous l'étape 1200 sur la figure 6. Dans la négative, le processus est rebouclé par réitération d'un sous programme 1100 puis 1100bis. Au contraire, dans l'affirmative les moyens de commande mettent en route un sous programme 1300 correspondant à un processus de mesure en phase stabilisée. Le déroulement du sous programme 1300 de mesure en phase stabilisée sera précisé ultérieurement en regard de la figure 10.

Le programme principal 1000 illustré sur la figure 6 prend fin lors de l'interruption de l'alimentation comme schématisé à l'étape 1800.

Comme on l'a indiqué précédemment, dans le cadre de l'invention, au cours des phases d'initialisation 1100 et 1100bis les moyens de commande pilotent les cellules piézo-électriques de sorte que le rapport entre le rythme d'excitation des cellules de référence 12 et celui des cellules de mesure de niveau 10 soit supérieur au rapport entre ces mêmes rythmes pendant le sous programme de mesure ultérieur en phase stabilisée 1300.

De préférence, ce rapport est de l'ordre de 1 pendant les phases d'initialisation 1100 et 1100bis et compris entre 1/100 et 1/10 et très préférentiellement de l'ordre de 1/50 pendant la phase stabilisée 1300.

Ainsi, de préférence, dans le cadre de l'invention, pendant les phases d'initialisation 1100 et 1100bis, il est mis en oeuvre un sous programme de mesure Trefi pour un sous programme de mesure TLi, tandis que pendant la phase de mesure stabilisée 1300, il est mis en oeuvre un sous programme de mesure Trefi pour plusieurs sous programmes de mesure TLi, par exemple typiquement 50 sous programmes de mesure TLi.

On va maintenant décrire le sous programme 1100 pour l'un des capteurs i en regard de la figure 7.

Ce sous programme 1100 débute par un sous programme 1110 de mesure de Trefi lui-même suivi d'un sous programme 1140 de mesure de TLi.

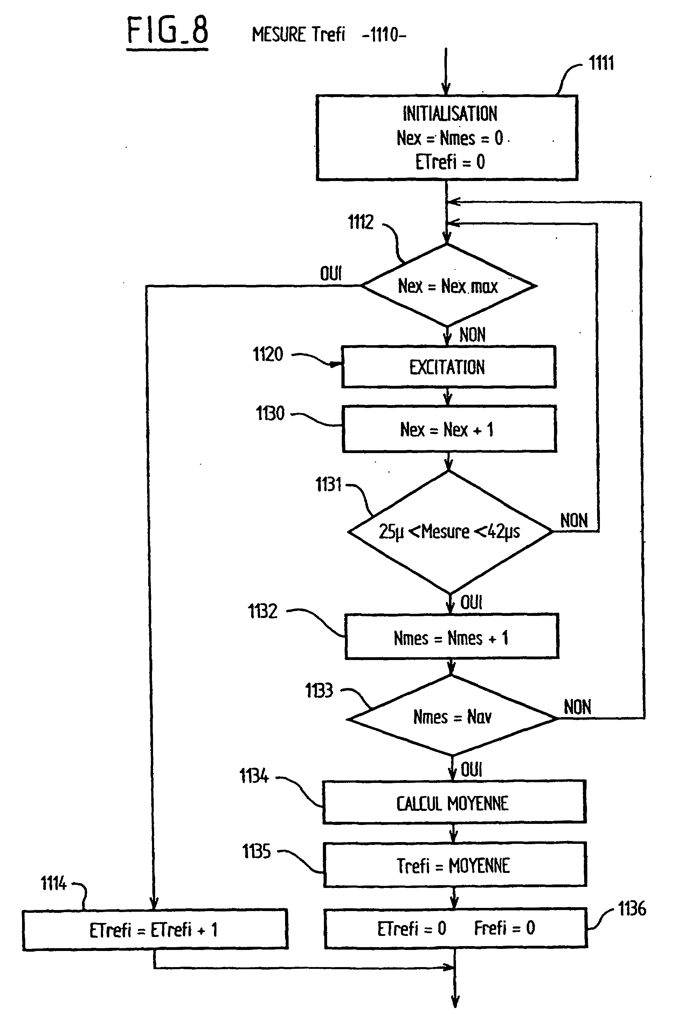

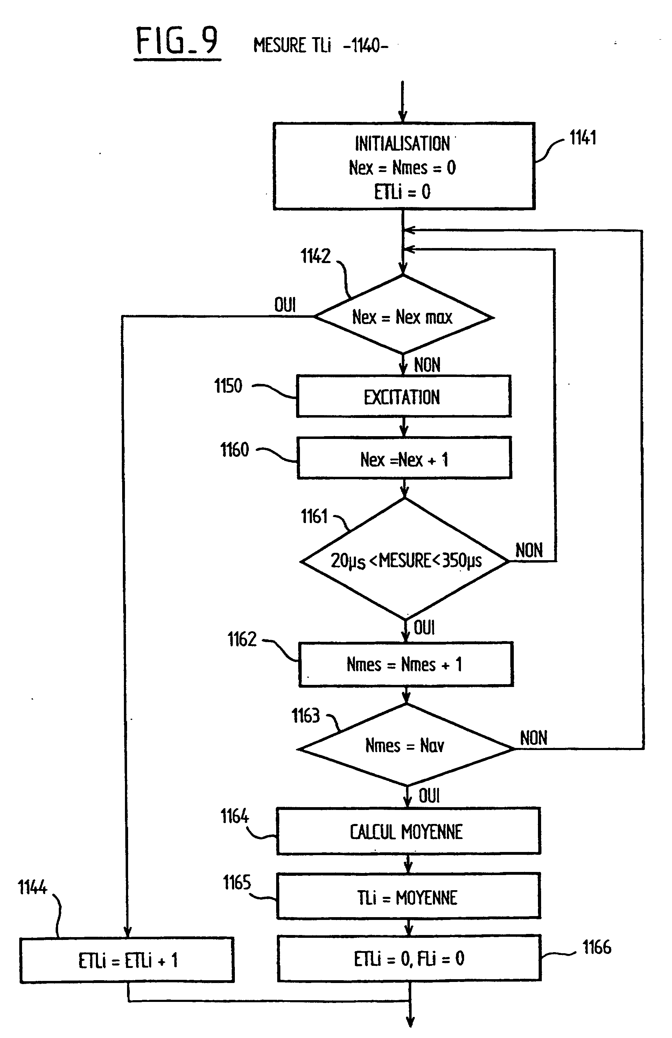

Ces deux sous programmes 1110 et 1140 seront précisés ultérieurement en regard des figures 8 et 9.

Après le sous programme 1140, les moyens de contrôle scrutent à l'étape 1170 si le paramètre ETLi est supérieur ou égal à une valeur prédéterminée par exemple 1200.

Dans l'affirmative, le sous programme 1100 est terminé.

Dans la négative, l'étape de scrutation 1170 est suivie par une étape de calcul 1171 au cours de laquelle les moyens de contrôle calculent la hauteur de liquide Li sur la base de la relation Li=D.TLi/Trefi.

On dispose ainsi à l'issue de l'étape 1171 une valeur indicative du niveau de liquide.

Cette étape de calcul 1171 est suivie d'une étape 1172, au cours de laquelle les moyens de contrôle déterminent si le paramètre ETrefi est supérieur à une valeur prédéterminée, par exemple 1200.

Dans la négative, le sous programme 1100 est terminé.

Au contraire, dans l'affirmative, l'étape de scrutation 1172 est suivie d'une étape 1173 au cours de laquelle les moyens de contrôle déterminent si le paramètre Li précédemment calculé est supérieur à une valeur prédéterminée, par exemple 22mm.

Dans la négative, le sous programme 1100 est terminé.

Dans l'affirmative, l'étape 1173 est suivie d'une étape 1174 au cours de laquelle, un défaut étant détecté pour la référence i, le paramètre Frefi est mis à 1.

On va maintenant décrire le sous programme de mesure de Trefi en regard de la figure 8.

Ce sous programme 1110 débute par une étape d'initialisation 1111 au cours de laquelle les paramètres Nex, Nmes et ETrefi sont mis à zéro.

A l'étape ultérieure 1112, les moyens de contrôle déterminent si le paramètre Nex est égal à Nexmax. On rappelle que Nexmax correspond à une valeur prédéterminée par exemple 99. Le nombre Nexmax correspond au nombre maximal d'impulsions générées successivement pendant une tentative d'acquisition d'écho (si aucun écho n'est détecté suite à cette suite d'impulsions, le processus est poursuivi sur un autre paramètre pour éviter de bloquer le système).

Dans l'affirmative, l'étape 1112 est suivie d'une étape 1114 au cours de laquelle les moyens de contrôle établissent ETrefi=ETrefi+1.

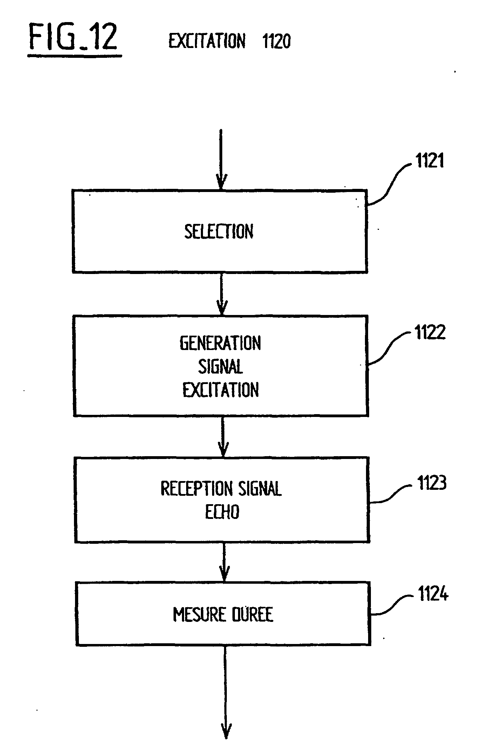

En cas de négative en sortie de l'étape 1112, celle-ci est suivie d'un sous programme d'excitation 1120 qui sera explicité plus en détail par la suite en regard de la figure 12.

Ce sous programme d'excitation est lui-même suivi d'une étape 1130 au cours de laquelle les moyens de contrôle incrémentent la valeur Nex avec Nex=Nex+1.

Après l'étape 1130, les moyens de contrôle mettent en oeuvre une étape de scrutation 1131 au cours de laquelle ils déterminent si le temps de mesure est compris entre deux valeurs prédéterminées acceptables, compte-tenu de la distance D séparant le réflecteur de référence 16 et la cellule 12, par exemple entre 25 et 42µs.

Dans la négative, l'étape 1131 est suivie de la remise en oeuvre de l'étape 1112.

Au contraire, dans l'affirmative, les moyens de contrôle mettent en oeuvre une étape 1132 d'incrémentation du paramètre Nmes sous forme de Nmes=Nmes+1.

L'étape 1132 est suivie ensuite d'une étape de scrutation 1133 au cours de laquelle les moyens de contrôle déterminent si Nmes=Nav. On rappelle que Nav correspond à un nombre de valeurs de temps obtenues nécessaire pour opérer une moyenne. Typiquement Nav=4.

Dans la négative, à l'issue de l'interrogation de l'étape 1133 celle-ci est suivie d'une réitération sur l'étape 1112.

Au contraire, dans l'affirmative à l'issue de l'interrogation de l'étape 1133, celle-ci est suivie d'un calcul de moyenne sur la base des valeurs obtenues, à l'étape 1134.

Cette dernière est elle-même suivie d'une étape 1135 au cours de laquelle on établit la valeur Trefi comme étant égale à la moyenne obtenue.

L'étape 1135 est elle-même suivie d'une étape 1136 au cours de laquelle les moyens de contrôle établissent ETrefi=0 et Frefi=0.

Le sous programme 1140 de mesure de TLi illustré sur la figure 9 suit le même organigramme général que le sous programme 1110 décrit précédemment en regard de la figure 8.

Pour cette raison, le sous programme de mesure TLi ne sera pas décrit dans le détail.

On notera simplement que les étapes composant le sous programme 1140 de mesure TLi possède des références numériques incrémentées de 30 par rapport à leur étape homologue illustrée sur la figure 8 et précédemment décrite.

En outre, on notera que le sous programme 1140 de mesure TLi illustré sur la figure 9 se distingue du sous programme 1110 de mesure Trefi illustré sur la figure 8, par les éléments suivants :
- à l'étape 1141 d'initialisation, il faut remplacer le paramètre ETrefi de l'étape 1111 par le paramètre ETLi ;
- à l'étape 1161 il convient d'adapter les bornes de temps utilisées pour la comparaison à la plage de temps requise pour parcourir un trajet aller-retour sur la cellule 10 après réflexion sur le niveau 14 de liquide, entre le niveau minimal et le niveau maximal. De préférence, la borne de temps inférieure utilisée à l'étape 1161 est inférieure à l'étape de temps homologue utilisée à l'étape 1131 et la borne de temps supérieure utilisée à l'étape 1161 est plus forte que la borne de temps homologue utilisée à l'étape 1131. Typiquement, à l'étape 1161 le temps de mesure est comparé aux valeurs de 20µs et 350µs ;
- à l'étape 1165 le paramètre Trefi de l'étape 1135 est remplacé par TLi ;
- à l'étape 1144 les moyens de contrôle établissent la relation ETLi=ETLi+1, et
- à l'étape 1166 les moyens de contrôle établissent des relations ETLi=0 et FLi=0.

On va maintenant décrire le sous programme 1300 de mesure en phase stabilisée illustré sur la figure 10.

Ce sous programme 1300 de mesure en phase stabilisée débute par une phase d'initialisation 1302 au cours de laquelle un paramètre d'itération n est mis à zéro.

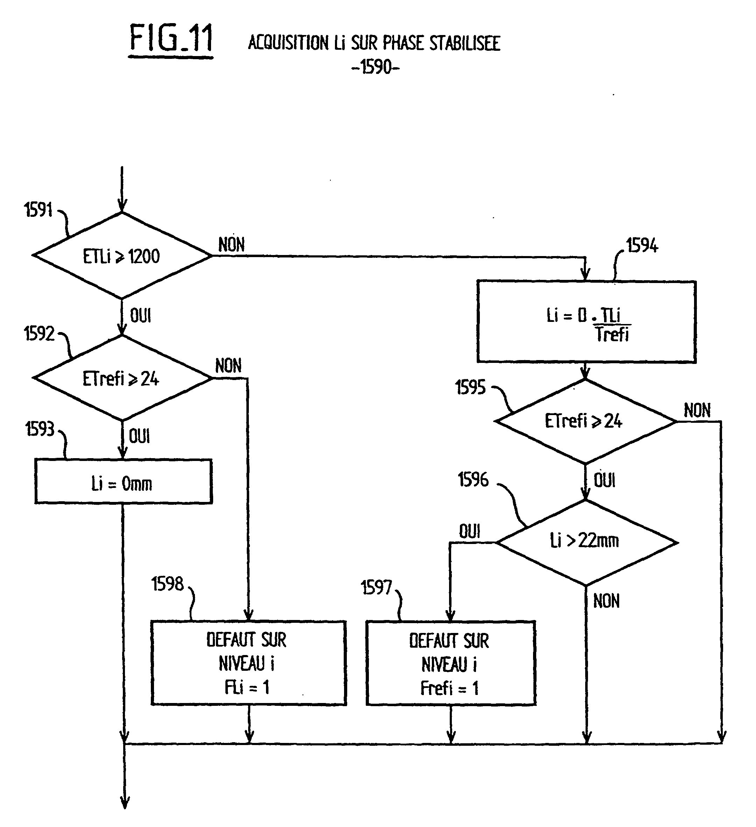

L'étape d'initialisation 1302 est suivie par :
- un sous programme 1310 de mesure de Tref1, c'est-à-dire d'un temps de référence pour l'ensemble S1, du type illustré sur la figure 8,
- un sous programme 1410 de mesure de Tref2, c'est-à-dire du temps de référence pour l'ensemble S2, également du type illustré sur la figure 8,
- un sous programme 1510 de mesure de TL1, c'est-à-dire du temps de mesure pour l'ensemble S1, du type illustré sur la figure 9,
- un sous programme 1590 d'acquisition de L1, c'est-à-dire de la hauteur du liquide dans la poche n°1 (ce sous programme d'acquisition 1590 sera décrit ultérieurement en regard de la figure 11),
- un sous programme 1610 de mesure de TL2, c'est-à-dire du temps de mesure pour l'ensemble S2 dans la poche n°2, également du type illustré sur la figure 9,
- un sous programme 1690 d'acquisition de L2, c'est-à-dire du niveau du liquide dans la poche n°2, également du type illustré sur la figure 11, et
- une étape 1700 d'incrémentation au cours de laquelle les moyens de contrôle incrémentent n à n+1.

Après l'étape 1700, les moyens de contrôle mettent en oeuvre une étape d'interrogation 1702 au cours de laquelle ils détectent si n=NL.

Tant que n n'est pas égal à NL, l'étape de scrutation 1702 est suivie d'un réitération des sous programmes 1510, 1590, 1610, 1690 et étape 1700.

En revanche, lorsque n est égal à NL, l'étape de scrutation 1702 est suivie d'une réitération en boucle à partir des sous programmes 1310 et 1410.

Comme indiqué précédemment, NL est typiquement compris entre 10 et 100, de préférence de l'ordre de 50. Cette valeur NL détermine le nombre d'acquisitions de niveau de liquide avant l'acquisition d'une nouvelle référence de temps pendant le processus de mesure en phase stabilisée 1300 et détermine par conséquent l'évolution du rapport rythme d'excitation des cellules de référence/rythme d'excitation des cellules de mesure entre la phase stabilisée 1300 et la phase d'initialisation (où ce rapport est de préférence égal à 1).

On va maintenant décrire le sous programme 1590 d'acquisition Li au cours du sous programme 1300 de mesure en phase stabilisée en regard de la figure 11.

Le sous programme 1590 débute par une étape d'interrogation au cours de laquelle les moyens de contrôle recherchent si le nombre de mesures invalides consécutives ETLi est supérieur à une valeur prédéterminée, par exemple supérieure ou égale à 1200.

Dans l'affirmative, l'étape 1591 est suivie d'une étape 1592 au cours de laquelle les moyens de contrôle recherchent si le nombre de mesures invalides consécutives Trefi est supérieur ou égal à une valeur déterminée, par exemple 24.

Dans l'affirmative, l'étape 1592 est suivie d'une étape 1593 au cours de laquelle les moyens de contrôle forcent la valeur déterminée pour le niveau de liquide Li à une valeur prédéterminée, par exemple Li=0mm.

En cas de réponse négative à l'issue de l'étape 1590, les moyens de contrôle mettent en oeuvre une étape 1594 au cours de laquelle ils déterminent la hauteur Li du liquide sur la base de la relation Li=D.TLi/Trefi.

Cette étape de calcul 1594 est suivie d'une étape d'interrogation 1595 comparable à l'étape 1592 au cours de laquelle les moyens de contrôle recherchent si le nombre de valeurs invalides ETrefi est supérieur ou égal à une valeur prédéterminée, par exemple 24.

Dans la négative, le sous programme d'acquisition 1590 est terminé.

Dans l'affirmative, l'étape 1595 est suivie d'une étape d'interrogation 1596 au cours de laquelle les moyens de contrôle recherchent si le paramètre Li calculé est supérieur à une valeur prédéterminée, par exemple de l'ordre de 22mm.

Dans la négative, le sous programme d'acquisition 1590 est terminé.

Dans l'affirmative, l'étape 1596 est suivie d'une étape 1597 au cours de laquelle les moyens de contrôle établissent une erreur sur la référence i en plaçant le paramètre Frefi à 1.

Par ailleurs, si la réponse à l'étape 1592 est négative, celle-ci est suivie d'une étape 1598 au cours de laquelle les moyens de contrôle ayant déterminé une erreur sur le niveau i, établissent le paramètre FLi à 1.

On va maintenant décrire le sous programme 1120 d'excitation en regard de la figure 12.

Ce sous programme est identique à celui référencé 1150 sur la figure 9.

Ce sous programme d'excitation 1120 comprend une étape initiale 1121 de sélection de l'ensemble S1 ou S2 concerné suivie d'une étape 1122 de génération d'un signal d'excitation des cellules piézo-électriques, d'une étape 1123 de détection des signaux émis par les cellules piézo-électriques suite à la réception d'un écho et d'une étape 1124 de mesure de la durée séparant l'émission du signal d'excitation et la détection de l'écho correspondant.

Comme on l'a indiqué précédemment, de préférence, les moyens conformes à la présente invention mettent en oeuvre au moins cycliquement un sous programme de diagnostic pendant lequel les cellules piézo-électriques sont isolées des sorties du démultiplexeur 22 appartenant aux moyens de commande et des moyens de diagnostic sont sensibles aux signaux présents sur ces sorties afin de détecter le bon fonctionnement de l'ensemble des moyens de commande.

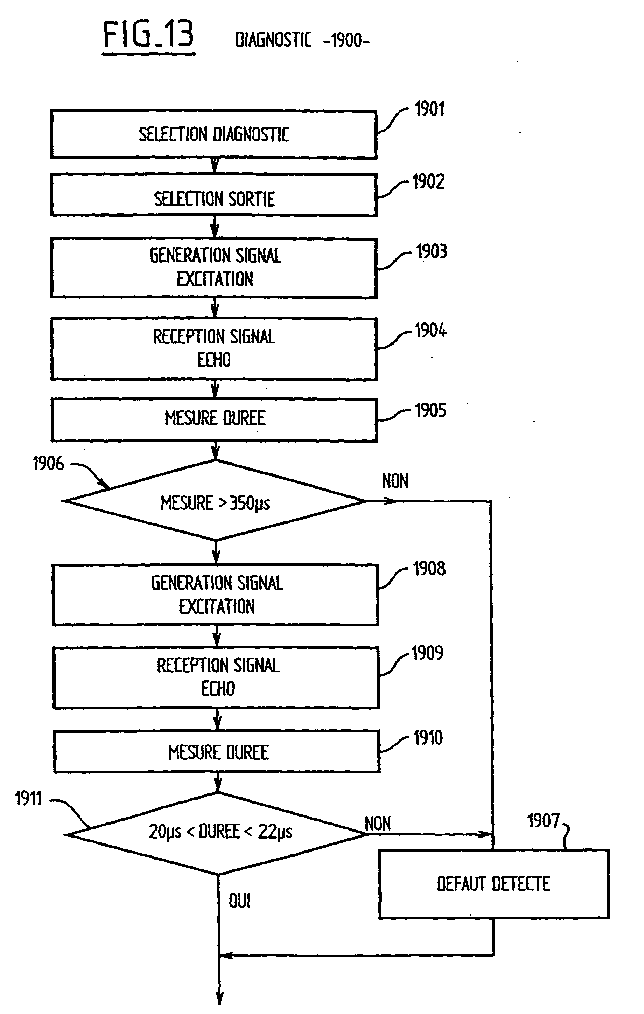

Ce sous programme de diagnostic 1900 (illustré sur la figure 13) débute par une étape 1901 de sélection de ce sous programme.

Par la suite le sous programme de diagnostic 1900 met en oeuvre des étapes 1902 de sélection des sorties concernées correspondant théoriquement à l'un des deux ensembles S1 ou S2, une étape 1903 pendant laquelle l'entrée 220 est validée par une durée déterminée (ce signal correspond au créneau sur la figure 5a) de sorte que des impulsions d'excitation du type représenté sur la figure 5b sont générées sur l'une des sorties du démultiplexeur 22. A titre d'exemple non limitatif, le temps T1 d'émission des impulsions d'excitation en question peut être de l'ordre de 18µs.

A l'étape consécutive 1904, les moyens de contrôle déterminent si à l'échéance d'un masque d'une durée supérieure au temps d'émission des impulsions d'excitation à l'étape 1903, un signal est détecté sur l'une des sorties du démultiplexeur 22. A titre d'exemple non limitatif, le masque précité a une durée de l'ordre de 20µs.

A l'étape suivante 1905, on opère une mesure de la durée.

Puis à l'étape ultérieure 1906, les moyens de contrôle déterminent si la durée maximale nécessaire pour un aller et retour de l'onde ultrasonore pour un niveau maximal de liquide est atteint (par exemple une durée de l'ordre de 350µs pour une hauteur maximale de 200mm), sans détection d'un écho.

En cas de réponse négative à cette étape 1906, c'est-à-dire si un signal est néanmoins détecté après l'échéance du masque et dans la durée maximale de temps aller/retour possible, les moyens de contrôle déterminent à l'étape 1907 que le circuit est en défaut.

Au contraire, si la réponse à la question de l'étape 1906 est positive, c'est-à-dire si aucun signal n'est détecté entre l'échéance du masque et de la durée maximale autorisée, le sous programme de diagnostic 1900 est prolongé par l'étape 1908 qui consiste à appliquer un créneau du type illustré sur la figure 5a sur l'entrée 220, d'une durée T1 supérieure au masque précité, par exemple de l'ordre 21µs. Puis à l'étape 1909, on détecte la validation d'un signal détecté sur l'une des sorties du circuit avec mesure de la durée à l'étape 1910. Et à l'étape d'interrogation 1911, on détermine si un signal a été perçu en sortie du circuit pendant un intervalle compris entre l'échéance du masque et un temps légèrement supérieur, par exemple entre 20 et 22µs.

Si aucun signal n'est reçu dans cet intervalle détecté à l'étape 1911, les moyens de contrôle déterminent que le circuit est en défaut à l'étape 1907.

Dans le cas contraire, le sous programme de diagnostic 1900 est terminé.

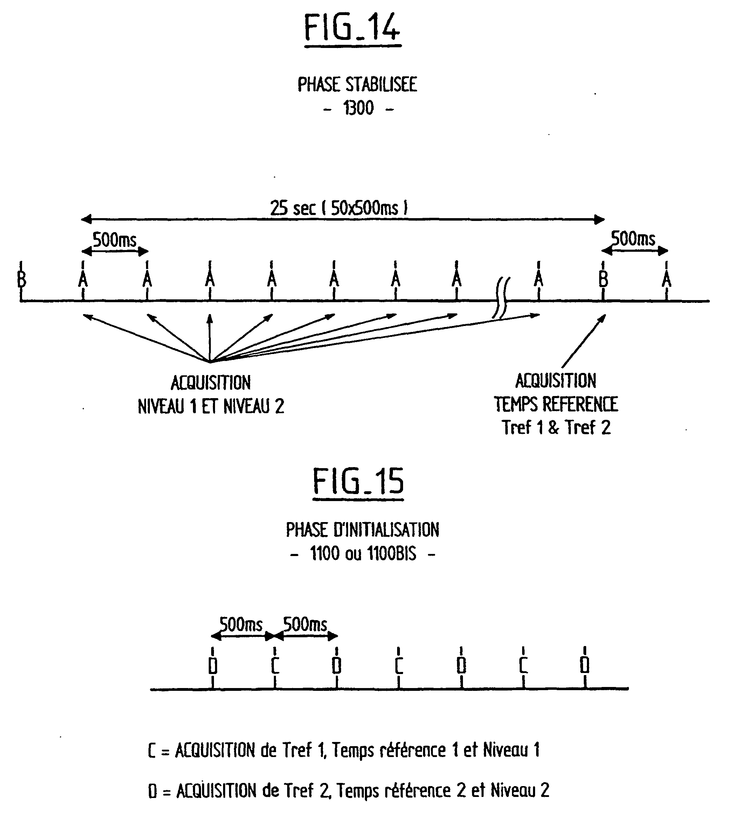

On va maintenant préciser la séquence de fonctionnement du dispositif conforme à la présente invention en regard des figures 14 à 19.

Comme indiqué précédemment, le processus est divisé en une phase de mesure stable 1300 précédée d'une phase d'initialisation 1100, 1100bis.

Comme illustré sur la figure 14, la phase stable d'initialisation comprend des suites de séquences A (ou 1510-1690) d'acquisition des niveaux 1 et 2 séparées par une étape B (ou 1310-1410) d'acquisition des temps de référence Tref1 et Tref2.

A titre d'exemple non limitatif, chaque séquence A et B peut durer typiquement 500ms et il peut être prévu par exemple 50 étapes A pour l'acquisition des niveaux 1 et 2, d'une durée unitaire de 500ms, soit une séquence totale d'étapes A de l'ordre de 25s, entre deux étapes B d'acquisition des temps de référence.

Comme illustré sur la figure 15, de préférence la phase d'initialisation mise en oeuvre lors de la mise en service de l'alimentation, peut être formée d'une succession alternée d'étapes D et C d'une durée unitaire de l'ordre de 500ms correspondant respectivement pour l'étape C à l'acquisition du temps de référence 1 et du niveau 1 (dans une première poche) et pour l'étape D à l'acquisition du temps de référence 2 et au niveau 2 (dans une seconde poche).

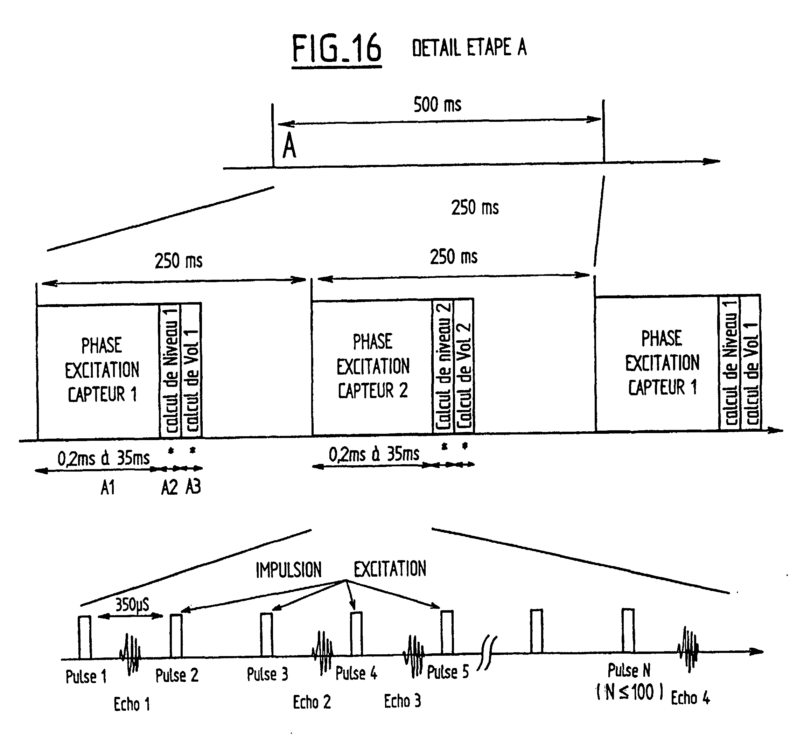

On a détaillé une étape de type A sur la figure 16.

De préférence, chaque étape A est elle-même scindée en deux sous périodes égales, typiquement de 250ms. Pendant chacune de ces sous périodes, on procède dans un premier temps A1 à l'excitation d'un capteur i, puis pendant un temps A2 au calcul du niveau i correspondant et pendant un temps ultérieur A3 au calcul du volume i correspondant en multipliant, le cas échéant par intégration, le niveau mesuré avec la section connue de la poche correspondante du réservoir.

Plus précisément encore comme on le voit sur le bas de la figure 16, chacun des temps A1 d'une sous période est constitué par une succession d'émissions d'impulsions d'excitation et de détection d'échos correspondants.

Le calcul de niveau i n'est opéré qu'après détection d'un nombre d'échos valides requis Nav, typiquement quatre échos valides. La valeur de niveau mémorisée correspond à la moyenne établie sur la base des quatre échos détectés.

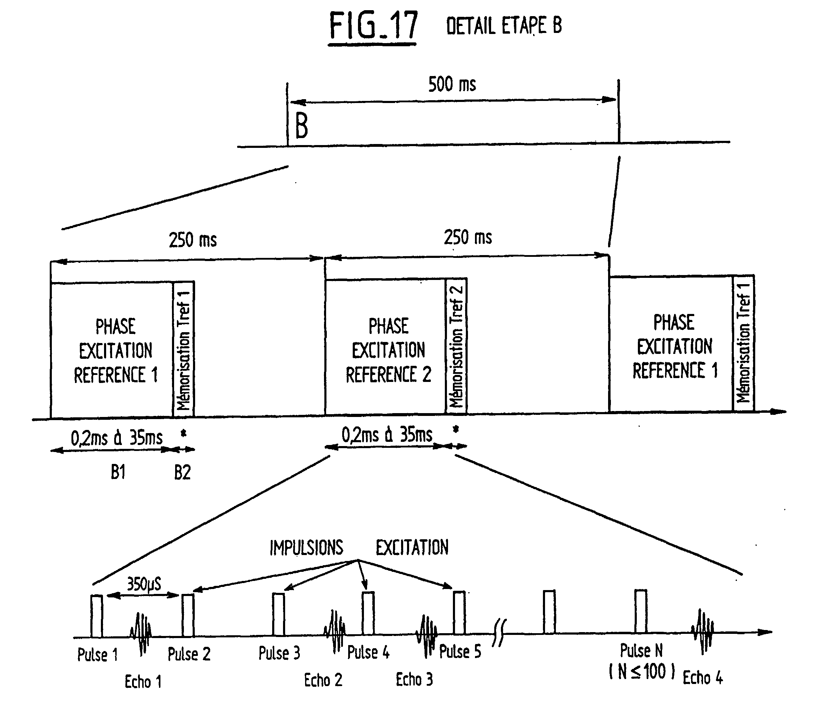

On a illustré sur la figure 17, le détail d'une étape B.

De façon comparable à l'étape A, chaque étape B est divisée en deux sous périodes égales dédiées respectivement à l'un des ensembles i, chaque sous période étant elle-même divisée, en un premier temps B1 d'excitation de la cellule de référence 12 correspondante pendant un temps compris typiquement entre 0,2ms et 35ms suivi d'un temps B2 de mémorisation du temps de référence Trefi correspondant.

Et là encore, chaque temps B1 est constitué d'une succession d'émissions d'impulsions d'excitation de la cellule 12 suivie de la détection de l'écho correspondant avec établissement de la moyenne sur la base d'un nombre d'échos valides requis, typiquement 4 échos valides.

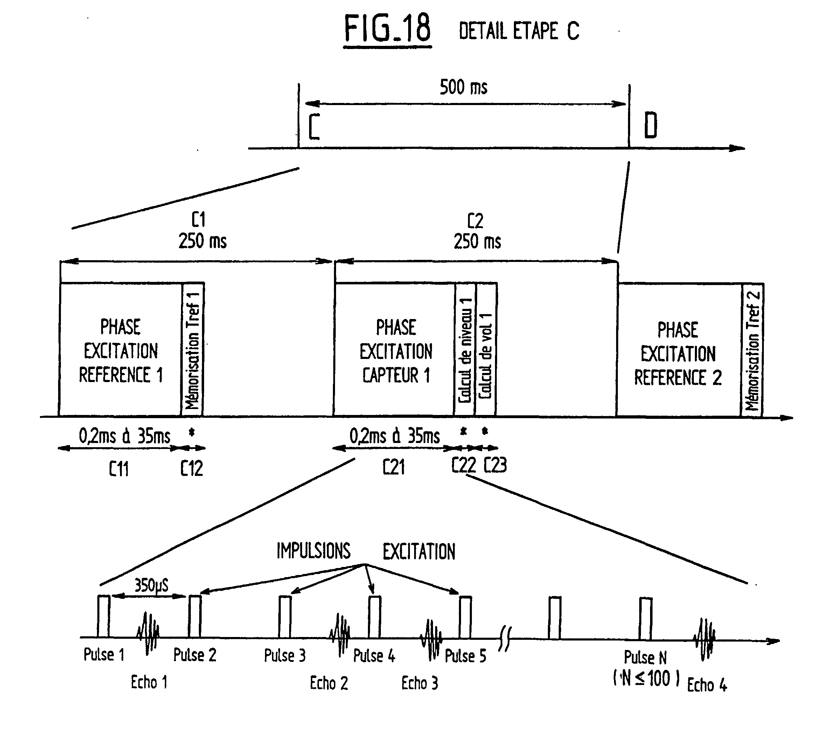

On a illustré sur la figure 18, le détail d'une étape C.

Là encore, chaque étape C est divisée en deux sous périodes, de préférence de durée identique de l'ordre de 250ms. L'une de ces sous périodes est dédiée à l'excitation de la cellule de référence i tandis que la deuxième sous période est dédiée à l'excitation de la cellule de mesure i correspondante.

La première sous période C1 comprend un premier temps C11, par exemple d'une durée de 0,2ms à 35ms d'excitation de la cellule de référence i suivi d'un temps C12 de mémorisation de Trefi.

La deuxième sous période C2 comprend un premier temps C21, par exemple de 0,2ms à 35ms d'excitation de la cellule de mesure i suivi d'un temps C22 de calcul du niveau i correspondant et d'un temps C23 de calcul du volume i correspondant. Là encore, chaque premier temps C11 et C21 est constitué d'une succession d'émissions d'impulsions d'excitation suivie d'une détection d'échos avec établissement d'une moyenne sur la base d'un nombre prédéterminé Nav (de préférence quatre) d'échos valides.

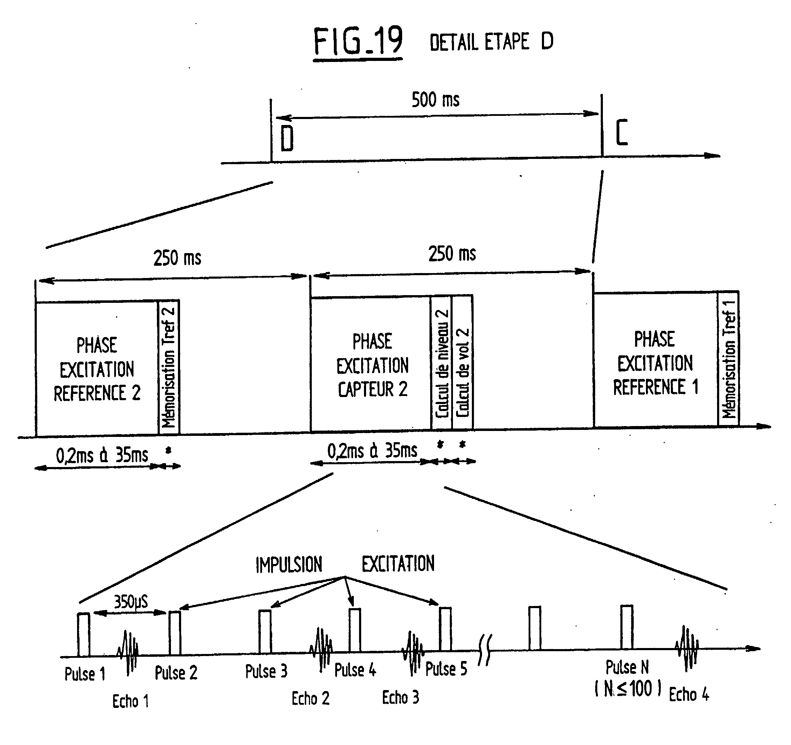

On a illustré sur la figure 19, le détail d'une étape D.

Celle-ci est identique à l'étape C précitée illustrée sur la figure 18 à ceci prêt qu'elle s'applique aux cellules de référence et de mesure d'un élément de détection i+1.

Bien entendu la présente invention n'est pas limitée au mode de réalisation particulier qui vient d'être décrit, mais s'étend à toutes variantes conformes à son esprit.

On a décrit précédemment un processus de mesure appliqué à un système comprenant deux ensembles de détection S1, S2 disposés respectivement dans les poches d'un réservoir bipoches. L'homme de l'art comprendra cependant que l'invention peut être utilisée pour un système monopoche ou encore dans un système comprenant un nombre x de poches supérieur à 2 et comportant par conséquent un même nombre x de sonde Si.

## Revendications

1. Dispositif de mesure de niveau de liquide, notamment pour la mesure de niveau de carburant dans un réservoir de véhicule automobile, comprenant au moins un ensemble de détection (Si) comportant au moins deux cellules piézo-électriques (10, 12) associées à des moyens de commande pour émettre des ondes ultrasonores respectivement en regard d'un réflecteur (16) de référence, situé à une distance connue (D) de la cellule associée (12) d'une part, et de la surface supérieure (14) du liquide d'autre part, et des moyens de traitement adaptés pour déterminer le niveau de liquide en exploitant les temps respectifs de propagation des ondes ultrasonores émises par chacune de ces deux cellules (10, 12), **caractérisé par le fait qu**'il comprend des moyens adaptés pour définir, après mise sous tension du dispositif, une phase d'initialisation (1100, 1100bis) pendant laquelle les moyens de commande pilotent les cellules piézo-électriques (10, 12) de sorte que le rapport entre le rythme d'excitation de la cellule de référence (12) et celui de la cellule de mesure de niveau (10) soit supérieur au rapport entre ces mêmes rythmes pendant la phase de mesure ultérieure stabilisée (1300).

2. Dispositif selon la revendication 1, **caractérisé par le fait que** le rapport entre les rythmes d'excitation de la cellule de référence (12) et celui de la cellule de mesure (10) de niveau est de l'ordre de 1 pendant la phase d'initialisation (1100, 1100bis) et est compris entre 1/10 et 1/100, de préférence de l'ordre de 1/50 pendant la phase de mesure stabilisée (1300).

3. Dispositif selon l'une des revendications 1 ou 2, **caractérisé par le fait qu'**il comprend i ensembles de détection comprenant chacun deux cellules piézo-électriques (10, 12) disposées respectivement dans les poches d'un réservoir multipoches.

4. Dispositif selon l'une des revendications 1 à 3, **caractérisé par le fait qu'**il comprend deux ensembles (S1, S2) comportant chacun une cellule piézo-électrique de référence (12) et une cellule piézo-électrique de mesure (10), disposées respectivement dans une poche d'un réservoir bipoches.

5. Dispositif selon l'une des revendications 1 à 4, **caractérisé par le fait que** chaque ensemble de détection (S1, S2) comprend une cellule piézo-électrique de mesure centrale (10) entourée d'une cellule piézo-électrique de référence annulaire (12).

6. Dispositif selon l'une des revendications 1 à 5, **caractérisé par le fait qu'**il comprend des moyens de commande adaptés pour mettre en oeuvre, après une initialisation (1101), un processus comprenant :
a) au moins une étape (1100, 1100bis) d'initialisation d'au moins un capteur (i) au cours de laquelle le système acquiert des paramètres, avec un rapport élevé entre le rythme d'excitation des cellules de référence (12) et le rythme d'excitation des cellules de mesure (10),
b) une étape (1200) de réitération de l'étape a) précitée pendant un temps déterminé, puis
c) une étape de mesure stabilisée (1300).

7. Dispositif selon la revendication 6, **caractérisé par le fait que** l'étape a) consiste à acquérir les paramètres successivement pour i ensembles de détection (Si).

8. Dispositif selon l'une des revendications 6 ou 7, **caractérisé par le fait que** pendant l'étape a), les moyens de contrôle procèdent successivement pour chacun des ensembles de détection (i) à des étapes (C, D) d'excitation alternées de la cellule piézo-électrique de référence (12) et de la cellule piézo-électrique de mesure (10).

9. Dispositif selon l'une des revendications 6 à 8, **caractérisé par le fait que** pendant l'étape c) de mesure stabilisée (1300), les moyens de contrôle définissent une succession d'excitations (A) des cellules de mesure (10), alternativement pour les (i) capteurs, entre deux étapes (B) d'excitation des cellules de référence correspondantes.

10. Dispositif selon l'une des revendications 1 à 9, **caractérisé par le fait que** chaque mesure est faite par la moyenne d'un nombre déterminé (Nav) de temps de mesure valides acquis, par exemple quatre temps de mesure valides successifs.

11. Dispositif selon l'une des revendications 1 à 10, **caractérisé par le fait qu'**il comprend en outre des moyens aptes à définir au moins séquentiellement un sous programme de diagnostic (1900) pendant lequel les cellules piézo-électriques (10, 12) sont isolées des sorties des moyens de commande et les moyens de diagnostic sont sensibles aux signaux présents sur les sorties de ces moyens de commande.

12. Dispositif selon la revendication 11, **caractérisé par le fait que** le sous programme de diagnostic (1900) comprend une phase (1903) d'émission de signal d'excitation pendant une durée inférieure à celle d'un masque temporel et la détection (1906) de l'absence d'un signal en sortie des moyens de commande pendant une durée de mesure maximale.

13. Dispositif selon l'une des revendications 11 ou 12, **caractérisé par le fait que** le sous programme de diagnostic (1900) comprend une phase (1908) d'émission d'un signal d'excitation pendant une durée supérieure à celle d'un masque temporel et la détection (1911) d'un signal en sortie des moyens de commande à l'échéance de ce masque temporel.

## Patentansprüche

1. Vorrichtung zur Flüssigkeitsstandmessung, insbesondere zur Messung des Kraftstoffstands in einem Kraftfahrzeugtank, die folgendes umfaßt: wenigstens eine Detektionseinheit (Si), welche wenigstens zwei mit Steuerungsmitteln verbundene piezoelektrische Zellen (10, 12) aufweist, um zum einen einem Referenzreflektor (16), der in einem bekannten Abstand (D) von der zugehörigen Zelle (12) angeordnet ist, beziehungsweise zum anderen der oberen Flüssigkeitsoberfläche (14) gegenüberliegendend Ultraschallwellen auszusenden, und Verarbeitungsmittel, die dazu ausgestaltet sind, den Flüssigkeitsstand zu bestimmen, indem sie die jeweilige Laufzeit der durch jede der zwei Zellen (10, 12) ausgesandten Ultraschallwellen auswerten, **dadurch gekennzeichnet, daß** sie Mittel umfaßt, die dazu ausgestaltet sind, nach dem Unterspannungsetzen der Vorrichtung eine Initialisierungsphase (1100, 1100a) festzulegen, während der die Steuerungsmittel die piezoelektrischen Zellen (10, 12) in der Weise steuern, daß das Verhältnis des Erregungstakts der Referenzzelle (12) und desjenigen der Zelle zur Messung des Stands (10) größer ist als das Verhältnis zwischen denselben Takten während der späteren stabilisierten Meßphase (1300).

2. Vorrichtung nach Anspruch 1, **dadurch gekennzeichnet, daß** das Verhältnis der Erregungstakte der Referenzzelle (12) und desjenigen der Zelle zur Messung (10) des Stands während der Initialisierungsphase (1100, 1100a) in der Größenordnung von 1 ist und während der stabilisierten Meßphase (1300) zwischen 1/10 und 1/100 liegt und vorzugsweise in der Größenordnung von 1/50 ist.

3. Vorrichtung nach einem der Ansprüche 1 oder 2, **dadurch gekennzeichnet, daß** sie i Detektionseinheiten umfaßt, die jede zwei piezoelektrische Zellen (10, 12) umfassen, die jeweils in den Kammern eines Mehrkammertanks angeordnet sind.

4. Vorrichtung nach einem der Ansprüche 1 bis 3, **dadurch gekennzeichnet, daß** sie zwei Einheiten (S1, S2) umfaßt, die jede eine piezoelektrische Referenzzelle (12) und eine piezoelektrische Messungszelle (10) aufweisen, die jeweils in den Kammern eines Tanks mit zwei Kammern angeordnet sind.

5. Vorrichtung nach einem der Ansprüche 1 bis 4, **dadurch gekennzeichnet, daß** jede Detektionseinheit (S1, S2) eine zentrische piezoelektrische Messungszelle (10) aufweist, die von einer ringförmigen piezoelektrischen Referenzzelle (12) umgeben ist.

6. Vorrichtung nach einem der Ansprüche 1 bis 5, **dadurch gekennzeichnet, daß** sie Steuerungsmittel umfaßt, die dazu ausgestaltet sind nach einer Initialisierung (1101) einen Vorgang auszuführen, der folgendes umfaßt:
a) wenigstens einen Schritt (1100, 1100a) zur Initialisierung wenigstens eines Sensors (i), in dessen Verlauf das System Parameter erfaßt, mit einem erhöhten Verhältnis des Erregungstakts der Referenzzellen (12) zum Erregungstakt der Messungszellen (10),
b) einen Schritt (1200) der Wiederholung des zuvor genannten Schritts a) während einer festgelegten Zeit, dann
c) einen stabilisierten Meßschritt (1300).

7. Vorrichtung nach Anspruch 6, **dadurch gekennzeichnet, daß** der Schritt a) daraus besteht nacheinander für i Detektionseinheiten (Si) die Parameter zu erfassen.

8. Vorrichtung nach einem der Ansprüche 6 oder 7, **dadurch gekennzeichnet, daß** während des Schritts a) die Kontrollmittel nacheinander für jede der Detektionseinheiten (i) Schritte (C, D) ausführen, die abwechselnd die piezoelektrische Referenzzelle (12) und die piezoelektrische Messungszelle (10) erregen.

9. Vorrichtung nach einem der Ansprüche 6 bis 8, **dadurch gekennzeichnet, daß** während des stabilisierten Schritts c) der Messung (1300) die Kontrollmittel abwechselnd für die (i) Sensoren eine Folge von Erregungen (A) der Messungszellen (10) zwischen zwei Erregungsschritten (B) der entsprechenden Referenzzellen ausführen.

10. Vorrichtung nach einem der Ansprüche 1 bis 9, **dadurch gekennzeichnet, daß** jede Messung durch das Mittel einer bestimmten Anzahl (Nav) erfaßter gültiger gemessener Zeiten ausgeführt wird, beispielsweise vier aufeinanderfolgender gültiger gemessener Zeiten.

11. Vorrichtung nach einem der Ansprüche 1 bis 10, **dadurch gekennzeichnet, daß** sie außerdem Mittel umfaßt, die dazu geeignet sind wenigstens zyklisch ein Diagnoseunterprogramm (1900) auszuführen, während dessen die piezoelektrischen Zellen (10, 12) von den Ausgängen der Steuerungsmittel getrennt sind und die Diagnosemittel auf die an den Ausgängen dieser Steuerungsmittel auftretenden Signale ansprechen.

12. Vorrichtung nach Anspruch 11, **dadurch gekennzeichnet, daß** das Diagnoseunterprogramm (1900) eine Phase (1903) des Aussendens von Erregnungssignalen für eine kürzere Dauer als die einer zeitlichen Maske und die Detektion (1906) der Abwesenheit eines Signals am Ausgang der Steuerungsmittel für eine maximale Meßdauer umfaßt.

13. Vorrichtung nach einem der Ansprüche 11 oder 12, **dadurch gekennzeichnet, daß** Diagnoseunterprogramm (1900) eine Phase (1908) des Aussendens von Erregnungssignalen für eine längere Dauer als die einer zeitlichen Maske und die Detektion (1911) eines Signals am Ausgang der Steuerungsmittel beim Ablauf dieser zeitlichen Maske umfaßt.

## Claims

1. Device for measuring liquid level, in particular for measuring fuel level in a motor vehicle tank, comprising at least one detection assembly (Si) comprising at least two piezoelectric cells (10, 12) associated with control means for emitting ultrasound waves respectively opposite a reference reflector (16), situated a known distance (D) from the associated cell (12) on the one hand, and from the upper surface (14) of the liquid on the other hand, and processing means suitable for determining the level of liquid by utilizing the respective times of propagation of the ultrasound waves emitted by each of these two cells (10, 12), **characterized in that** it comprises means suitable for defining, after the device is switched on, an initialization phase (1100, 1100bis) during which the control means operate the piezoelectric cells (10, 12) in such a way that the ratio of the rate of excitation of the reference cell (12) to that of the level measurement cell (10) is greater than the ratio of these same rates during the stabilized subsequent measurement phase (1300).

2. Device according to Claim 1, **characterized in that** the ratio of the rates of excitation of the reference cell (12) to that of the level measurement cell (10) is of the order of 1 during the initialization phase (1100, 1100bis) and lies between 1/10 and 1/100, and is preferably of the order of 1/50 during the stabilized measurement phase (1300).

3. Device according to one of Claims 1 or 2, **characterized in that** it comprises i detection assemblies each comprising two piezoelectric cells (10, 12) disposed respectively in the reservoirs of a multi-reservoir tank.

4. Device according to one of Claims 1 to 3, **characterized in that** it comprises two assemblies (S1, S2) each comprising a reference piezoelectric cell (12) and a measurement piezoelectric cell (10), disposed respectively in a reservoir of a two-reservoir tank.

5. Device according to one of Claims 1 to 4, **characterized in that** each detection assembly (S1, S2) comprises a central measurement piezoelectric cell (10) surrounded by an annular reference piezoelectric cell (12).

6. Device according to one of Claims 1 to 5, **characterized in that** it comprises control means able to implement, after an initialization (1101), a procedure comprising:
a) at least one step (1100, 1100bis) for initializing at least one sensor (i) in the course of which the system acquires parameters, with a high ratio of the rate of excitation of the reference cells (12) to the rate of excitation of the measurement cells (10),
b) a step (1200) of iteratively repeating the aforesaid step a) for a determined time, then
c) a stabilized measurement step (1300).

7. Device according to Claim 6, **characterized in that** step a) consists in acquiring the parameters successively for i detection assemblies (Si).

8. Device according to one of Claims 6 or 7, **characterized in that** during step a), the supervisory means proceed successively for each of the detection assemblies (i) to alternating steps (C, D) of excitation of the reference piezoelectric cell (12) and of the measurement piezoelectric cell (10).

9. Device according to one of Claims 6 to 8, **characterized in that** during step c) of stabilized measurement (1300), the supervisory means define a succession of excitations (A) of the measurement cells (10), alternately for the (i) sensors, between two steps (B) of excitation of the corresponding reference cells.

10. Device according to one of Claims 1 to 9, **characterized in that** each measurement is made by averaging a determined number (Nav) of acquired valid measurement times, for example four successive valid measurement times.

11. Device according to one of Claims 1 to 10, **characterized in that** it furthermore comprises means able to define at least sequentially a diagnostic subroutine (1900) during which the piezoelectric cells (10, 12) are isolated from the outputs of the control means and the diagnostic means are sensitive to the signals present on the outputs of these control means.

12. Device according to Claim 11, **characterized in that** the diagnostic subroutine (1900) comprises an excitation signal emission phase (1903) lasting a duration less than that of a temporal mask and the detection (1906) of the absence of a signal at the output of the control means for a maximum measurement duration.

13. Device according to one of Claims 11 or 12, **characterized in that** the diagnostic subroutine (1900) comprises a phase (1908) of emission of an excitation signal lasting a duration greater than that of a temporal mask and the detection (1911) of a signal at the output of the control means upon the expiry of this temporal mask.
